# EUROPEAN PATENT APPLICATION

(11) **EP 4 821 666 A1**
(43) Date of publication of application: **14.10.2026**
(21) Application number: 24900245.2
(22) Date of filing: 10.09.2024
(51) Int. Cl.: B31B 50/00, B29C 51/10, B29C 51/16, B29C 63/02, B29C 65/18

(54) **FILM AFFIXATION DEVICE AND FILM AFFIXATION METHOD**

(30) Priority: 06.12.2023 JP 2023205989
(71) Applicant: Tokan Kogyo Co., Ltd., Tokyo 141-0022 (JP)
(72) Inventor: SHIGA, Yoshiaki, Tokyo 141-0022 (JP); YAMAGUCHI, Masaru, Tokyo 141-0022 (JP); NARITA, Kodai, Tokyo 141-0022 (JP)
(74) Representative: Hautier IP - MC/EP
(86) International application number: PCT/JP2024/032390
(87) International publication number: WO 2025/120948

(57) **Abstract**

A film application device includes: a lower die having a recessed portion configured to accommodate an accommodation portion, a placement surface formed on an outer circumferential side of the recessed portion, the placement surface being configured such that a flange is placed, a stepped portion formed on the outer circumferential side of the placement surface, a first vacuum channel having a first end opening in the stepped portion; and a blade portion configured to press down a resin film by being moved downward, and air in a sealed space is drawn through the first vacuum channel, the sealed space being formed by, in a state in which the flange is pressed by an outer circumferential edge of a heating plate, the resin film pressed down by the blade portion, an outer edge portion of the flange, and the lower die.

## Description

### TECHNICAL FIELD

The present invention relates to a film application device and a film application method.

### BACKGROUND ART

JPH11-240536A discloses a film application device that applies a resin film to a container portion.

However, in the film application device described in Patent Document 1, because a vacuum channel opens in a placement surface on which a flange is placed, there was a problem that it was not possible to cause the resin film to be properly folded around a lower surface outer edge portion of the flange and to reliably cover the lower surface outer edge portion.

The present invention has been made in view of such a problem, and an object thereof is to provide a film application device and a film application method capable of satisfactorily performing wrapping of a resin film around a flange of a container portion.

According to an aspect of the present invention, provided is a film application device for applying a resin film to a container portion made of a fibrous material, the film application device including: a lower die provided so as to be stationary or movable up and down, the lower die having a recessed portion configured to accommodate an accommodation portion of the container portion, a placement surface formed on an outer circumferential side of the recessed portion, the placement surface being configured such that a flange of the container portion is placed, a stepped portion formed on the outer circumferential side of the placement surface, and a first vacuum channel having a first end opening in the stepped portion; a flange presser provided directly above the lower die so as to be movable up and down or stationary, the flange presser being configured to press the flange via the resin film by relative movement with respect to the lower die; and a pressing-down portion provided directly above the lower die so as to be movable up and down or stationary, the pressing-down portion being configured to press down the resin film by relative movement with respect to the lower die, wherein the stepped portion has a stepped surface provided at a position lower than the placement surface, the stepped surface being configured to clamp the resin film together with the flange presser, and a gas in a sealed space is drawn through the first vacuum channel in communication with the sealed space, the sealed space being formed by, in a state in which the flange is pressed by the flange presser, the resin film pressed down by the pressing-down portion, an outer edge portion of the flange protruding toward the outer circumferential side from the placement surface, and the lower die.

### BRIEF DESCRIPTION OF DRAWINGS

[FIG. 1] FIG. 1 is a schematic explanatory diagram showing a container according to the present embodiment.
[FIG. 2] FIG. 2 is a perspective view showing a paper container portion constituting the container.
[FIG. 3] FIG. 3 is a sectional view showing a film application device according to the present embodiment.
[FIG. 4] FIG. 4 is a sectional view showing a state of the film application device in step 1 of a film application method.
[FIG. 5] FIG. 5 is a sectional view showing a state of the film application device in step 2 of the film application method.
[FIG. 6] FIG. 6 is a sectional view showing a state of the film application device in step 3 of the film application method.
[FIG. 7] FIG. 7 is an enlarged view in which a main portion M in FIG. 6 is enlarged.
[FIG. 8] FIG. 8 is a sectional view showing a state of the film application device in step 4 of the film application method.
[FIG. 9] FIG. 9 is a sectional view showing a state of the film application device in step 5 of the film application method.
[FIG. 10] FIG. 10 is an enlarged view in which a main portion M in FIG. 9 is enlarged.
[FIG. 11] FIG. 11 is a sectional view showing a state of the film application device in step 6 of the film application method.
[FIG. 12] FIG. 12 is a sectional view showing a first modification of the first vacuum channel.
[FIG. 13] FIG. 13 is a sectional view showing a second modification of the first vacuum channel.

### DESCRIPTION OF EMBODIMENTS

Hereinafter, embodiments for carrying out the present invention (hereinafter also referred to as "the present embodiment") will be described with reference to the accompanying drawings. In the present specification, the same reference numerals are assigned to the same elements throughout.

### [Container]

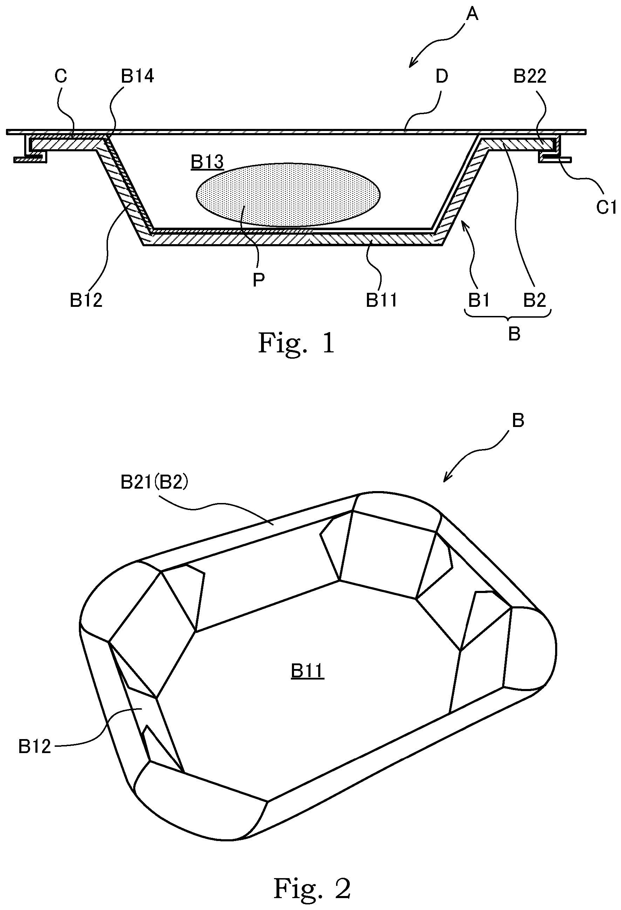

A container A according to the present embodiment will be described with reference to FIGs. 1 and 2.

FIG. 1 is a schematic explanatory diagram showing the container A according to the present embodiment. FIG. 2 is a perspective view showing a paper container portion B constituting the container A.

As shown in FIGs. 1 and 2, the container A is, for example, a container that accommodates a content P such as food, and includes a paper container portion B serving as a container portion, a resin film C, and a top seal D.

The paper container portion B is assembled by folding a single sheet of paperboard along perforations or ruled lines, and has an accommodation portion B1 in which the content P is accommodated and a flange B2 formed on an outer circumferential side of the accommodation portion B1.

As shown in FIG. 1, the accommodation portion B1 has: a bottom plate B11 that has a substantially octagonal shape; a plurality of (eight plates in this case) side plates B12 that are formed at the outer edge of the bottom plate B11 so as to be inclined with respect to the bottom plate B11; and an accommodation region B13 that is surrounded by the bottom plate B11 and the plurality of side plates B12. Here, an opening of the accommodation region B13 is referred to as an opening B14.

The flange B2 is constituted by a plurality of bent portions B21 formed by bending each of the plurality of side plates B12 outward. The flange B2 is formed parallel to the bottom plate B11.

The resin film C is made of, for example, a thermoplastic resin film such as polypropylene (PP), or the like. On an inner side of the paper container portion B (specifically, an upper surface of the bottom plate B11 and inner side surfaces of the plurality of side plates B12), an upper surface of the flange B2, an end surface continuous with the upper surface, and a lower surface outer edge continuous with the end surface, the resin film C is caused to come into close contact (heat-sealed) so as to cover them. As described above, an outer edge portion B22 of the flange B2 is wrapped around by the resin film C. In other words, the resin film C has a wrapping portion C1 that wraps around the outer edge portion B22 of the flange B2. Note that "wrapping" also includes a state in which the resin film C at least extends inward beyond the outer edge portion B22 of the flange B2.

The top seal D is formed of, for example, a thermoplastic resin seal such as polyethylene terephthalate (PET), or the like. In a state in which the content P is accommodated in the paper container portion B, the top seal D seals the opening B14 of the accommodation portion B1 so as to be in close contact with and cover the resin film C that is placed on the upper surface of the flange B2.

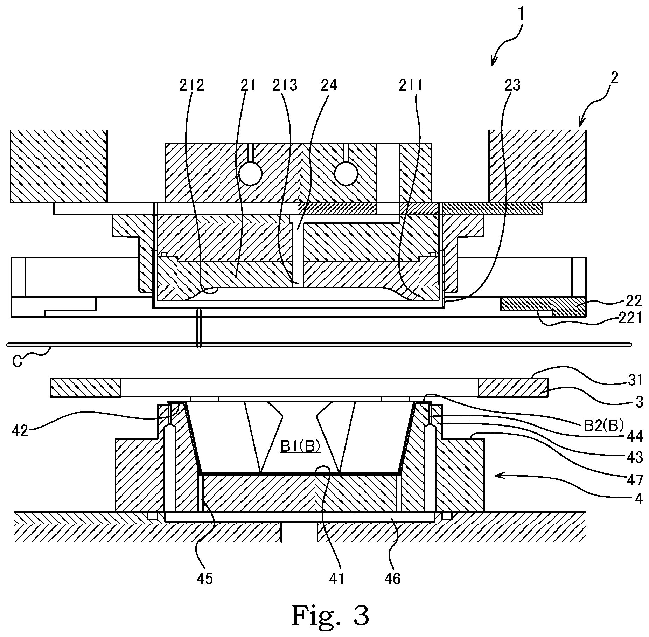

Because the wrapping portion C1 of the resin film C wraps around the outer edge portion B22 of the flange B2, when peeling the top seal D from the resin film C, it is possible to suppress the resin film C from peeling off from the outer edge portion B22. A film application device 1 (see FIG. 3) that wraps the resin film C around the outer edge portion B22 of the flange B2 of the paper container portion B will be described later.

In the present embodiment, the container portion is constituted by the paper container portion B, but the present invention is not limited thereto, and the container portion may be constituted by, for example, a molded component made of a plant-derived material through which gas can pass. In other words, the container portion may be made of a fibrous material.

### [Film Application Device]

Next, the film application device 1 according to the present embodiment will be described with reference to FIG. 3.

FIG. 3 is a sectional view showing the film application device 1 according to the present embodiment.

As shown in FIG. 3, the film application device 1 according to the present embodiment is a device that applies the resin film C to the paper container portion B, and includes an upper die 2, a lower presser 3, and a lower die 4.

The upper die 2 is provided directly above the lower die 4 so as to be movable up and down with respect to the lower die 4 by driving of a drive source such as, for example, a motor, a cylinder, or the like. In addition, the upper die 2 has: a heating plate 21 serving as a heating unit that heats the resin film C to its melting point or higher; an annular upper presser 22 that is provided on the outer circumferential side of the heating plate 21 and presses (in other words, clamps) the resin film C from above and below together with the lower presser 3; a blade portion 23 serving as a pressing-down portion that is located between the heating plate 21 and the upper presser 22 so as to be adjacent to the heating plate 21; and a vacuum/pressure channel 24 that is formed above the heating plate 21 and communicates with through holes 213, which will be described later, in the heating plate 21.

The heating plate 21 is a heating unit that heats up when, for example, electricity is supplied. The heating plate 21 is fixed to the upper die 2 so as to face the lower die 4. In other words, the heating plate 21 is provided directly above the lower die 4 so as to be movable up and down with respect to the lower die 4. With such a configuration, compared to a structure in which a heating unit is provided on the upstream side of the lower die 4, it is possible to achieve simplification and size reduction of the structure of the entire film application device 1. In addition, compared to the structure in which the heating unit is provided on the upstream side of the lower die 4, a step of conveying the resin film C from the heating unit to the lower die 4 on the downstream side can be omitted, and therefore it is possible to achieve simplification of the operation of the film application device 1. Note that, the heating plate 21 is formed to have a substantially rectangular shape in plan view so as to conform to the shape of the flange B2 of the paper container portion B.

In addition, the heating plate 21 has: an annular (specifically, rectangular annular) outer circumferential edge 211 serving as a flange presser that presses the flange B2 via the resin film C; a depressed portion 212 that is formed on the inner circumferential side of the outer circumferential edge 211; and the plurality of through holes 213 that are located on the inner circumferential side of the outer circumferential edge 211 and penetrate through the heating plate 21 in the thickness direction thereof.

As described above, because the flange presser is constituted by the annular outer circumferential edge 211 of the heating plate 21, compared to a structure in which the flange presser and the heating plate 21 are formed as separate components, it is possible to achieve simplification of the structure of the entire film application device 1 and to efficiently heat the resin film C placed on a placement surface 42, which will be described later. Note that a lower surface of the outer circumferential edge 211 facing the lower die 4 is a flat surface.

In the present embodiment, the heating unit is constituted by the heating plate 21 that is fixed to the upper die 2 so as to be located directly above the lower die 4, but the present invention is not limited thereto, and the heating unit may be constituted by, for example, a heater provided on the upstream side of the lower die 4. In such a case, the flange presser is not constituted by the outer circumferential edge 211 of the heating plate 21, and is constituted by a component fixed to the upper die 2.

In the present embodiment, the through holes 213 are used for both vacuum and compressed air, but the present invention is not limited thereto, and the through holes 213 may be used only for compressed air, for example. In such a case, for example, a plurality of vacuum through holes are formed in the heating plate 21 in a separate manner.

The upper presser 22 is fixed to the upper die 2 so as to protrude downward beyond the heating plate 21. With such a configuration, the heating plate 21 and the upper presser 22 can move up and down integrally. As a result, compared to a structure in which the heating plate 21 and the upper presser 22 move up and down individually, it is possible to achieve simplification of the operation of the film application device 1.

The blade portion 23 is provided directly above the lower die 4 so as to be movable up and down with respect to the heating plate 21 by driving of a drive source such as, for example, a motor, or the like. With such a configuration, compared to a structure in which a blade portion is provided on the downstream side of the lower die 4, it is possible to achieve simplification and size reduction of the structure of the entire film application device 1. In addition, compared to the structure in which the blade portion is provided on the downstream side of the lower die 4, a step of conveying the resin film C from the lower die 4 to the downstream side can be omitted, and therefore it is possible to achieve simplification of the operation of the film application device 1.

Then, the blade portion 23 is configured such that a tip end portion thereof protrudes beyond the lower surface of the outer circumferential edge 211 when the blade portion 23 is moved to the most upward position (in other words, an initial position). In addition, a presser lower surface 221 of the upper presser 22 that presses the resin film C is located at a level lower than the tip end portion of the blade portion 23 when the blade portion 23 is moved to the initial position.

In the present embodiment, the pressing-down portion is constituted by the blade portion 23 that cuts the resin film C, but the present invention is not limited thereto, and the pressing-down portion may be constituted by a member different from the blade portion 23.

The lower presser 3 is an annular presser that presses the resin film C from above and below together with the upper presser 22. The lower presser 3 is provided so as to be movable up and down with respect to the upper die 2 and the lower die 4 by driving of a drive source such as, for example, a motor, a cylinder, or the like. In addition, the lower presser 3 is provided on the outer circumferential side of the lower die 4.

In the present embodiment, the lower presser 3 is supported by the lower die 4 so as to be movable up and down, but the present invention is not limited thereto, and the lower presser 3 may be supported by the upper die 2 so as to be movable up and down, for example.

In the present embodiment, the lower die 4 is provided directly below the upper die 2 so as not to be movable in the vertical direction (in other words, stationary), but the present invention is not limited thereto, and the lower die 4 may be provided directly below the upper die 2 so as to be movable up and down, for example. In such a case, the upper die 2 may be provided so as to be movable up and down or may be provided so as to be stationary.

The lower die 4 has: a recessed portion 41 that is formed directly below the heating plate 21 so as to face the heating plate 21; an annular (specifically, substantially rectangular annular) placement surface 42 that is formed on the outer circumferential side of the recessed portion 41 and on which the flange B2 is placed; an annular stepped portion 43 that is formed on the outer circumferential side of the placement surface 42 so as to be adjacent to the placement surface 42; a plurality of first vacuum channels 44 that are formed such that first ends open in the stepped portion 43; a plurality of second vacuum channels 45 that are formed such that the first ends open in the recessed portion 41; a communication vacuum channel 46 that communicates with the plurality of the first vacuum channels 44 and the plurality of the second vacuum channels 45; and an annular cutting surface 47 that is formed on the outer circumferential side of the stepped portion 43.

The accommodation portion B1 of the paper container portion B is accommodated in the recessed portion 41. The recessed portion 41 has a bottom surface 411 on which the bottom plate B11 of the accommodation portion B1 is placed, and a side surface 412 that is in close contact with the outer side surfaces of the side plates B12.

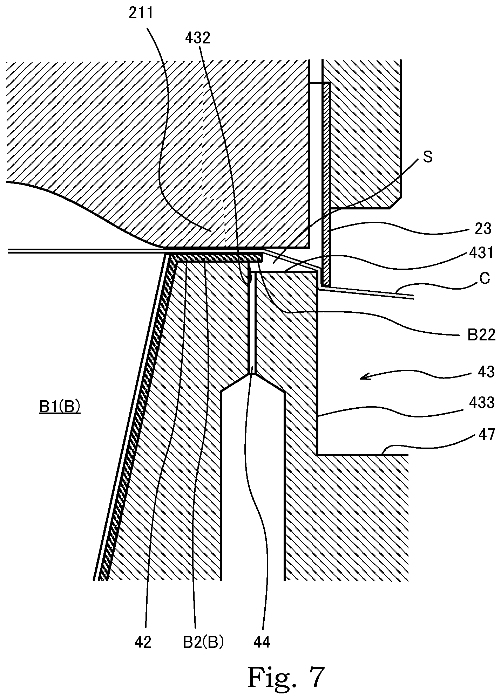

The placement surface 42 is a flat surface that is continuous with an upper end of the side surface 412 of the recessed portion 41 so as to be parallel to the bottom surface 411. The placement surface 42 is formed directly below the outer circumferential edge 211 of the heating plate 21 so as to face the outer circumferential edge 211. When the flange B2 is placed on the placement surface 42, a portion of the flange B2 that protrudes toward the outer circumferential side from the placement surface 42 is the outer edge portion B22 (see FIG. 7).

In the present embodiment, the stepped portion 43 is formed on the outer circumferential side of the placement surface 42 over the entire circumference, but the present invention is not limited thereto, and the stepped portion 43 may be formed at four corners of the substantially rectangular annular placement surface 42.

The stepped portion 43 has: a stepped surface 431 that is provided at a position lower than the placement surface 42 so as to face the outer circumferential edge 211 of the heating plate 21; a connection surface 432 that is formed so as to extend in the vertical direction and that connects the stepped surface 431 and the placement surface 42; and an outer circumferential surface 433 that is formed so as to extend in the vertical direction. In addition, the stepped portion 43 is located on the inner circumferential side of the blade portion 23. In other words, the blade portion 23 is located on the outer circumferential side of the stepped portion 43 (specifically, the stepped surface 431).

The first vacuum channel 44 is formed in the lower die 4 such that the first end opens in the stepped surface 431 and extends along the vertical direction. When the flange B2 is placed on the placement surface 42, the outer edge portion B22 of the flange B2 covers the first end of the first vacuum channel 44 so as to be spaced apart from the first end of the first vacuum channel 44 (see FIG. 7). Specifically, the first vacuum channel 44 is formed such that the first end is located on the inner circumferential side of the end surface of the outer edge portion B22. More specifically, the first vacuum channel 44 is formed such that the first end thereof is in contact with the connection surface 432 in plan view. A clearance of at least twice the thickness of the resin film C is formed between the outer edge portion B22 of the flange B2 and the stepped surface 431. It is preferable that the clearance formed between the outer edge portion B22 of the flange B2 and the stepped surface 431 is at least three times the thickness of the resin film C. In addition, the first vacuum channel 44 is formed such that the second end communicates with the communication vacuum channel 46.

In the present embodiment, the plurality of first vacuum channels 44 open over the entire circumference of the annular stepped surface 431, with their first ends spaced at predetermined intervals, but the present invention is not limited thereto, and the first end of the first vacuum channel 44 may open, for example, at a position of the stepped surface 431 corresponding to a tab for peeling the top seal D.

The second vacuum channels 45 are formed in the lower die 4 such that the first ends thereof open at connection locations where the bottom surface 411 and the side surface 412 are connected and extend in the vertical direction. In addition, the second vacuum channels 45 are formed such that the second ends communicate with the communication vacuum channel 46.

As described above, because the communication vacuum channel 46 communicates with both the first vacuum channels 44 and the second vacuum channels 45, it is possible to perform both suction from the first vacuum channel 44 and suction from the second vacuum channel 45 simultaneously.

The cutting surface 47 is spaced further from the upper die 2 than the stepped surface 431. In addition, the cutting surface 47 is connected to a lower end of the outer circumferential surface 433.

### [Film Application Method by Film Application Device]

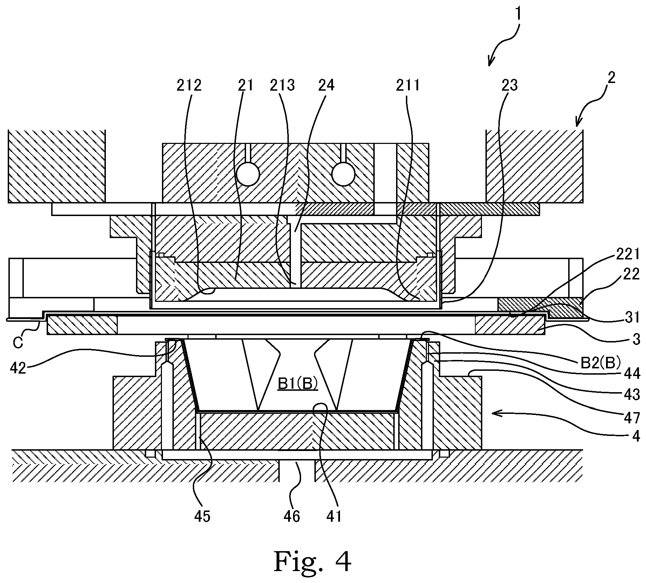

Next, the film application method according to the present embodiment will be described with reference to FIGs. 4 to 11.

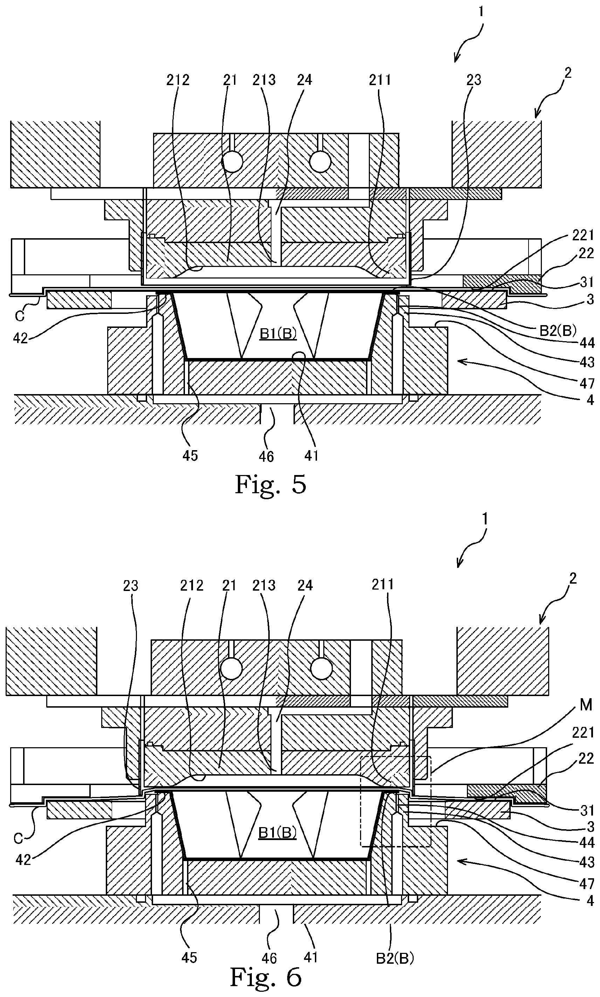

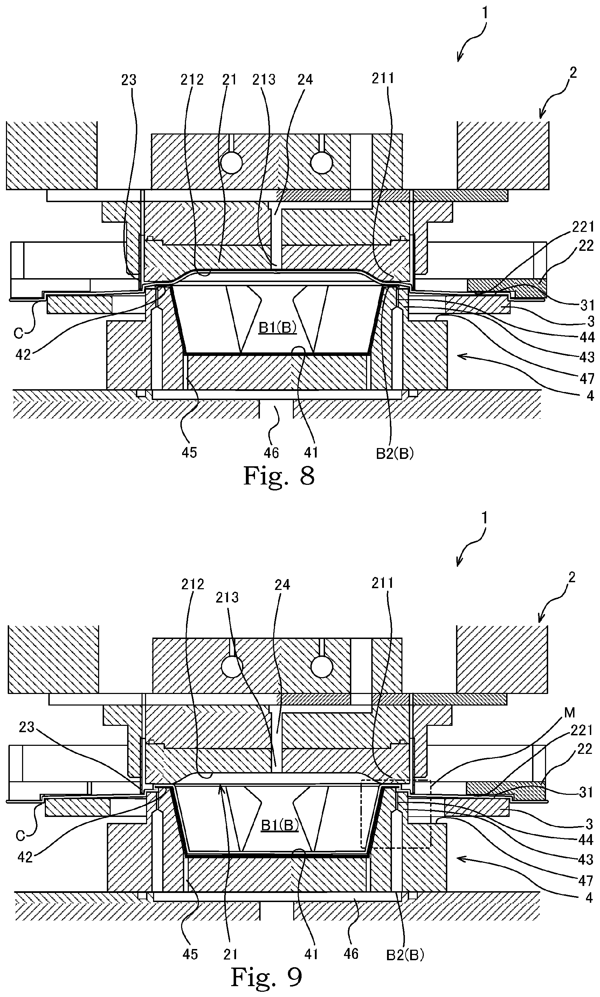

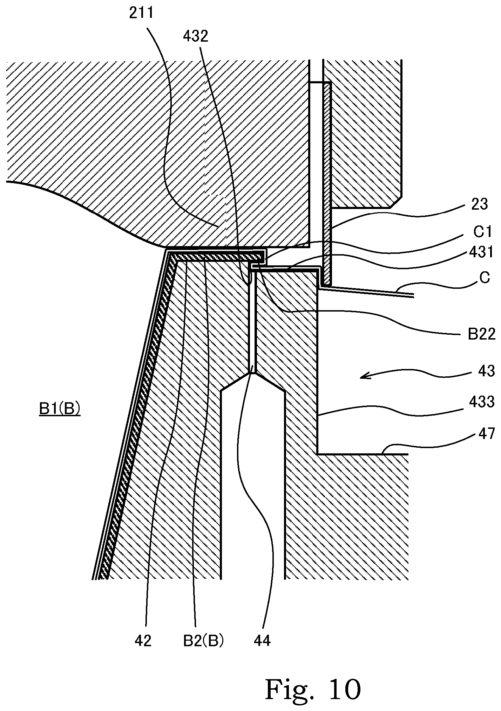

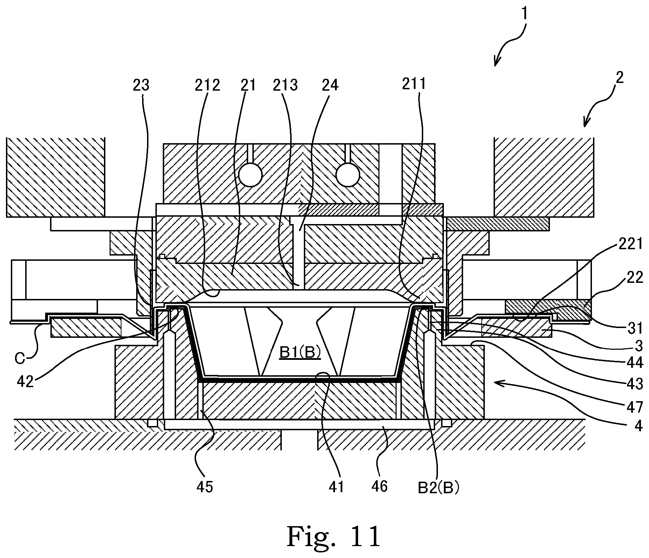

FIG. 4 is a sectional view showing a state of the film application device 1 in step 1 of the film application method. FIG. 5 is a sectional view showing a state of the film application device 1 in step 2 of the film application method. FIG. 6 is a sectional view showing a state of the film application device 1 in step 3 of the film application method. FIG. 7 is an enlarged view in which a main portion M in FIG. 6 is enlarged. FIG. 8 is a sectional view showing a state of the film application device 1 in step 4 of the film application method. FIG. 9 is a sectional view showing a state of the film application device 1 in step 5 of the film application method. FIG. 10 is an enlarged view in which a main portion M in FIG. 9 is enlarged. FIG. 11 is a sectional view showing a state of the film application device 1 in step 6 of the film application method.

The film application method performed by the film application device 1 includes steps 1 to 6.

First, as shown in FIG. 4, in step 1, the upper presser 22 and the lower presser 3 of the film application device 1 clamp, from above and below, the resin film C conveyed by, for example, a conveying mechanism (not shown) including a feeding roller and a winding roller.

Specifically, in a state in which the resin film C conveyed by the conveying mechanism is located between the upper presser 22 and the lower presser 3, by moving the upper die 2 downward with respect to the lower presser 3 (in other words, lowering the upper die 2), the resin film C is horizontally clamped between the presser lower surface 221 of the upper presser 22 and a presser upper surface 31 of the lower presser 3.

Next, as shown in FIG. 5, in step 2, in a state in which the resin film C is horizontally clamped between the presser lower surface 221 of the upper presser 22 and the presser upper surface 31 of the lower presser 3, the upper die 2 is moved downward together with the lower presser 3 such that the resin film C comes into contact with the flange B2 of the paper container portion B, which has been placed in the recessed portion 41 in advance.

In a state in which the resin film C and the flange B2 placed on the placement surface 42 are in contact, the resin film C and the outer circumferential edge 211 of the heating plate 21 are not in contact and are spaced apart.

Next, as shown in FIGs. 6 and 7, in step 3, in a state in which the resin film C is clamped between the presser lower surface 221 of the upper presser 22 and the presser upper surface 31 of the lower presser 3, the upper die 2 is moved further downward, together with the lower presser 3, such that the resin film C comes into contact with the flange B2 (in other words, such that the flange B2 is pressed by the outer circumferential edge 211 of the heating plate 21 via the resin film C).

As described above, because the upper presser 22 protrudes downward beyond the heating plate 21, the presser lower surface 221 of the upper presser 22 protrudes downward beyond the lower surface of the outer circumferential edge 211 of the heating plate 21. With such a configuration, in a state in which the flange B2 is pressed by the outer circumferential edge 211 via the resin film C (in other words, in a state in which the resin film C is sandwiched between the flange B2 and the outer circumferential edge 211), the resin film C located between the flange B2 and the presser lower surface 221 of the upper presser 22 is pressed downward. As a result, tension is applied to the pressed-down resin film C.

In addition, as shown in FIG. 7, in a state in which the flange B2 is pressed by the outer circumferential edge 211 via the resin film C, the resin film C pressed down by the lowering movement of the upper presser 22 and the lower presser 3 is further pressed downward by the blade portion 23.

In this state, the blade portion 23 is located on the outer circumferential side of the stepped portion 43, and the resin film C is sandwiched between the tip end portion of the blade portion 23 and the outer circumferential surface 433 of the stepped portion 43. In other words, in this state, the tip end portion of the blade portion 23 and the outer circumferential surface 433 overlap along the vertical direction. In this state, when the tip end portion of the blade portion 23 touches the film C, the film C is not cut. In other words, the film C is not cut by merely pressing the tip end portion of the blade portion 23 against the film C.

Then, in this state, a sealed space S is formed by the resin film C pressed down by the blade portion 23 (specifically, the resin film C located between the outer circumferential edge 211 and the blade portion 23), the outer edge portion B22 of the flange B2, and the lower die 4 (specifically, the stepped surface 431 and the connection surface 432 of the stepped portion 43). As described above, by utilizing the lowering movement of the blade portion 23 caused by the lowering movement of the upper die 2, there is no need to separately provide a pressing-down portion different from the blade portion 23, and it is possible to easily form the sealed space S that is formed by the resin film C pressed down by the blade portion 23, the outer edge portion B22, and the lower die 4. As a result, it is possible to achieve simplification of the structure of the entire film application device 1 and simplification of the operation of the film application device 1.

Next, as shown in FIG. 8, in step 4, the film application device 1 draws air as a gas located between the depressed portion 212 of the heating plate 21 and the resin film C via the plurality of through holes 213, which are in communication with the vacuum/pressure channel 24, thereby causing the resin film C to be attracted to the depressed portion 212, and then, the resin film C is heated to its melting point or higher.

As a result, compared to a structure in which the resin film C is heated without being attracted to the heating plate 21, a heating time required for heating the resin film C can be shortened, and therefore, it is possible to improve efficiency of heating the resin film C.

Next, as shown in FIG. 10, in step 5, the film application device 1 draws air as a gas in the sealed space S via the first vacuum channels 44, which are in communication with the communication vacuum channel 46, thereby causing the resin film C that is heated and enclosing the sealed space S to cover the outer edge portion B22 of the flange B2 (specifically, the upper surface, the end surface, and the lower surface of the outer edge portion B22) so as to wrap around the outer edge portion B22.

Thereby, by only drawing the air in the sealed space S, compared to suction in a structure in which the sealed space S is not formed, it is possible to favorably perform wrapping of the resin film C around the flange B2 of the paper container portion B (specifically, the lower surface of the outer edge portion B22 of the flange B2). As a result, it is possible to improve reliability of the wrapping portion C1 that wraps around the outer edge portion B22 of the flange B2.

In addition, as described above, because the outer edge portion B22 covers the first ends of the first vacuum channels 44, compared to a structure in which the outer edge portion B22 does not cover the first ends of the first vacuum channels 44, it is possible to favorably perform wrapping of the resin film C around the flange B2 of the paper container portion B (specifically, the lower surface of the outer edge portion B22 of the flange B2). As a result, it is possible to improve reliability of the wrapping portion C1 that wraps around the outer edge portion B22 of the flange B2.

Furthermore, as described above, because the first vacuum channels 44 are formed such that their first ends are located on the inner circumferential side of the end surface of the outer edge portion B22, compared to a structure in which the first ends of the first vacuum channels 44 are not located on the inner circumferential side of the end surface of the outer edge portion B22, it is possible to favorably perform wrapping of the resin film C around the flange B2 of the paper container portion B (specifically, the lower surface of the outer edge portion B22 of the flange B2). As a result, it is possible to improve reliability of the wrapping portion C1 that wraps around the outer edge portion B22 of the flange B2.

As shown in FIG. 10, the resin film C is folded back by suction through the first vacuum channels 44 so as to cover the lower surface of the outer edge portion B22 and the stepped surface 431 in a closely contacting manner.

Simultaneously, as shown in FIG. 9, the film application device 1 draws air serving as a gas located between the accommodation portion B1 and the resin film C via the second vacuum channels 45 that are in communication with the communication vacuum channel 46, thereby causing the resin film C, which has been heated and softened, to line the accommodation portion B1 so as to be in close contact with the inner side surface of the accommodation portion B1. Note that the air located between the accommodation portion B1 and the resin film C is drawn into the second vacuum channels 45 through perforations or locations where the side plates B12 overlap with each other.

As described above, because the suction through the first vacuum channels 44 and the suction through the second vacuum channels 45 are performed simultaneously, it is possible to perform a wrapping step of wrapping the resin film C around the outer edge portion B22 of the flange B2 and a covering step of covering the accommodation portion B1 with the resin film C simultaneously. As a result, it is possible to improve efficiency of the film application method by the film application device 1.

Simultaneously, the film application device 1 applies compressed air from the plurality of through holes 213 that are in communication with the vacuum/pressure channel 24 above the resin film C located on the inner circumferential side of the outer circumferential edge 211, thereby causing the resin film C, which has been heated and softened, to line the accommodation portion B1 so as to be in close contact with the inner side surface of the accommodation portion B1.

With such a configuration, compared to a configuration in which the accommodation portion B1 is covered with the resin film C only by suction through the second vacuum channels 45, it is possible to improve reliability of covering the accommodation portion B1 with the resin film C.

Next, as shown in FIG. 11, in step 6, the film application device 1 can complete the paper container portion B lined with the resin film by cutting excess resin film C with the blade portion 23. Specifically, by moving the blade portion 23 downward such that the tip end of the blade portion 23 and the cutting surface 47 come into contact, the excess resin film C can be cut.

### [Operational Advantages]

Next, operational advantages according to the present embodiment will be described.

The film application device 1 according to the present embodiment applies the resin film C to the paper container portion B (the container portion), and includes: the lower die 4 having the recessed portion 41 configured to accommodate the accommodation portion B1 of the paper container portion B (the container portion), the placement surface 42 formed on the outer circumferential side of the recessed portion 41, the placement surface 42 being configured such that the flange B2 of the paper container portion B (the container portion) is placed, the stepped portion 43 formed on the outer circumferential side of the placement surface 42, and the first vacuum channel 44 having the first end opening in the stepped portion 43; the flange presser (the outer circumferential edge 211) provided directly above the lower die 4 so as to be movable up and down with respect to the lower die 4, the flange presser (the outer circumferential edge 211) being configured to press the flange B2 via the resin film C by downward movement; and the pressing-down portion (the blade portion 23) provided directly above the lower die 4 so as to be movable up and down with respect to the lower die 4, the pressing-down portion (the blade portion 23) being configured to press down the resin film C by downward movement, wherein the stepped portion 43 has the stepped surface 431 provided at a position lower than the placement surface 42, the stepped portion 43 being configured to clamp the resin film C together with the flange presser (the outer circumferential edge 211), and the gas (the air) in the sealed space S is drawn through the first vacuum channel 44 in communication with the sealed space S, the sealed space S being formed by, in a state in which the flange B2 is pressed by the flange presser (the outer circumferential edge 211), the resin film C pressed down by the pressing-down portion (the blade portion 23), the outer edge portion B22 of the flange B2 protruding toward the outer circumferential side from the placement surface 42, and the lower die 4.

The film application method according to the present embodiment is a film application method performed by the film application device 1, and includes: step 3 of pressing the flange B2 by the flange presser (the outer circumferential edge 211) and pressing down the resin film C by the pressing-down portion (the blade portion 23); and step 5 of drawing the gas (the air) in the sealed space S via the first vacuum channel 44.

According to these configurations, by utilizing the lowering movement of the blade portion 23, it is possible to easily form the sealed space S enclosed by the resin film C pressed down by the blade portion 23, the outer edge portion B22, and the lower die 4.

In addition, by only drawing the air in the sealed space S, compared to suction in a structure in which the sealed space S is not formed, it is possible to favorably perform wrapping of the resin film C around the flange B2 of the paper container portion B (specifically, the lower surface of the outer edge portion B22 of the flange B2). As a result, it is possible to improve reliability of the wrapping portion C1 that wraps around the outer edge portion B22 of the flange B2.

In addition, in the present embodiment, the film application device 1 further includes the heating unit (the heating plate 21) configured to heat the resin film C, the heating unit is constituted by the heating plate 21 provided directly above the lower die 4 so as to be movable up and down with respect to the lower die 4, and the flange presser is constituted by the outer circumferential edge 211 of the heating plate 21.

According to this configuration, compared to the structure in which the heating unit is provided on the upstream side of the lower die 4, it is possible to achieve simplification and size reduction of the structure of the entire film application device 1. Furthermore, compared to the structure in which the heating unit is provided on the upstream side of the lower die 4, the step of conveying the resin film C from the heating unit to the lower die 4 on the downstream side can be omitted, and therefore it is possible to achieve simplification of the operation of the film application device 1.

In addition, compared to the structure in which the flange presser and the heating plate 21 are formed as separate components, it is possible to achieve simplification of the structure of the entire film application device 1 and to efficiently heat the resin film C placed on the placement surface 42.

In addition, in the present embodiment, the film application device 1 further includes the upper presser 22 and the lower presser 3 configured to press the resin film C from above and below, and the pressing-down portion (the blade portion 23) is located between the heating plate 21 and the upper presser 22.

According to this configuration, because the resin film C pressed by the upper presser 22 and the lower presser 3 can be pressed down by the blade portion 23 that is located between the heating plate 21 and the upper presser 22, it is possible to apply tension to the resin film C.

In addition, in the present embodiment, the film application device 1 further includes the upper die 2 provided so as to be movable up and down with respect to the lower die 4, the upper die 2 being configured such that the heating plate 21 and the upper presser 22 are fixed to the upper die 2.

According to this configuration, because the heating plate 21 and the upper presser 22 can move up and down integrally, compared to the structure in which the heating plate 21 and the upper presser 22 move up and down individually, it is possible to achieve simplification of the operation of the film application device 1.

In addition, in the present embodiment, the pressing-down portion is constituted by the blade portion 23, the blade portion 23 being provided on the outer circumferential side of the heating plate 21 so as to be movable up and down with respect to the heating plate 21, and the blade portion 23 is configured to cut the resin film C.

According to this configuration, compared to the structure in which the blade portion is provided on the downstream side of the lower die 4, it is possible to achieve simplification and size reduction of the structure of the entire film application device 1. In addition, compared to the structure in which the blade portion is provided on the downstream side of the lower die 4, the step of conveying the resin film C from the lower die 4 to the downstream side can be omitted, and therefore it is possible to achieve simplification of the operation of the film application device 1.

In addition, by utilizing the lowering movement of the blade portion 23, there is no need to separately provide a pressing-down portion different from the blade portion 23, and it is possible to easily form the sealed space S enclosed by the resin film C pressed down by the blade portion 23, the outer edge portion B22, and the lower die 4. As a result, it is possible to achieve simplification of the structure of the entire film application device 1 and simplification of the operation of the film application device 1.

In addition, in the present embodiment, the first vacuum channel 44 has the first end opening in the stepped surface 431, and the outer edge portion B22 is configured to cover the first end of the first vacuum channel 44 in plan view.

According to this configuration, compared to the structure in which the outer edge portion B22 does not cover the first end of the first vacuum channel 44, it is possible to favorably perform wrapping of the resin film C around the flange B2 of the paper container portion B (specifically, the lower surface of the outer edge portion B22 of the flange B2). As a result, it is possible to improve reliability of the wrapping portion C1 that wraps around the outer edge portion B22 of the flange B2.

In addition, in the present embodiment, the lower die 4 is formed with the second vacuum channel 45 having first end opening in the recessed portion 41, the resin film C is caused to come into close contact with the accommodation portion B1 by drawing the gas (the air) located between the resin film C and the accommodation portion B1 through the second vacuum channel 45, and the drawing through the first vacuum channel 44 and the drawing through the second vacuum channel 45 are performed simultaneously.

According to this configuration, it is possible to perform the wrapping step of wrapping the resin film C around the outer edge portion B22 of the flange B2 and the covering step of covering the accommodation portion B1 with the resin film C simultaneously. As a result, it is possible to improve efficiency of the film application method by the film application device 1.

### [Modification]

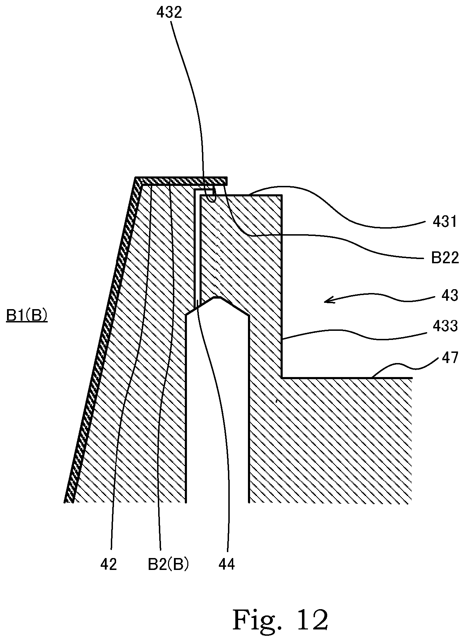

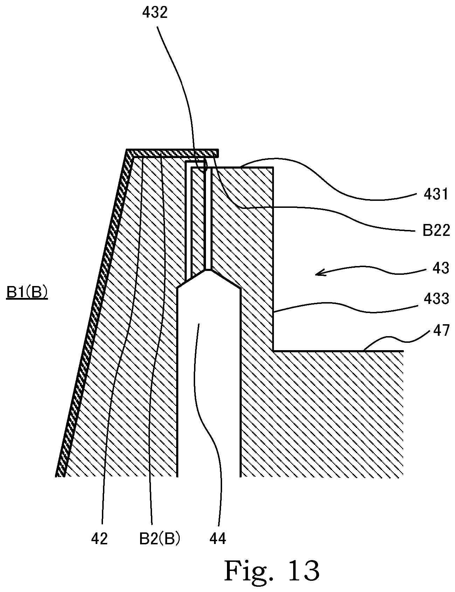

Next, modifications of the first vacuum channels 44 will be described with reference to FIGs. 12 and 13. In the modifications, description of points that are the same as the embodiment described above is omitted, and points that are different from the embodiment described above will be mainly described.

FIG. 12 is a sectional view showing a first modification of the first vacuum channel 44. FIG. 13 is a sectional view showing a second modification of the first vacuum channel 44.

In the present embodiment, the first vacuum channel 44 is formed such that the first end opens in the stepped surface 431, but the present invention is not limited thereto, and the first vacuum channel 44 may be formed such that the first end opens in the connection surface 432 as shown in FIG. 12, for example, or the first vacuum channel 44 may be formed such that both of branched ends open, respectively, in the stepped surface 431 and the connection surface 432 as shown in FIG. 13.

As shown in FIG. 13, in a case in which both of the branched ends of the first vacuum channel 44 open, respectively, in both the stepped surface 431 and the connection surface 432, by suction through the first vacuum channel 44, the resin film C can be brought into closer contact with the connection surface 432 and the lower surface of the outer edge portion B22 of the flange B2, and therefore it is possible to more favorably perform wrapping of the resin film C around the flange B2 of the paper container portion B (specifically, the lower surface of the outer edge portion B22 of the flange B2). As a result, it is possible to further improve reliability of the wrapping portion C1 that wraps around the outer edge portion B22 of the flange B2.

Although the present embodiment and the modifications have been described above, the embodiment and modifications described above merely show a part of application examples of the present invention, and there is no intention to limit the technical scope of the present invention to the specific configurations of the embodiments described above.

## Claims

1. A film application device for applying a resin film to a container portion made of a fibrous material, the film application device comprising:
a lower die provided so as to be stationary or movable up and down, the lower die having a recessed portion configured to accommodate an accommodation portion of the container portion, a placement surface formed on an outer circumferential side of the recessed portion, the placement surface being configured such that a flange of the container portion is placed, a stepped portion formed on the outer circumferential side of the placement surface, and a first vacuum channel having a first end opening in the stepped portion;
a flange presser provided directly above the lower die so as to be movable up and down or stationary, the flange presser being configured to press the flange via the resin film by relative movement with respect to the lower die; and
a pressing-down portion provided directly above the lower die so as to be movable up and down or stationary, the pressing-down portion being configured to press down the resin film by relative movement with respect to the lower die, wherein
the stepped portion has a stepped surface provided at a position lower than the placement surface, the stepped surface being configured to clamp the resin film together with the flange presser, and
a gas in a sealed space is drawn through the first vacuum channel in communication with the sealed space, the sealed space being formed by, in a state in which the flange is pressed by the flange presser, the resin film pressed down by the pressing-down portion, an outer edge portion of the flange protruding toward the outer circumferential side from the placement surface, and the lower die.

2. The film application device according to claim 1, further comprising a heating unit configured to heat the resin film, wherein
the heating unit is constituted by a heating plate provided directly above the lower die so as to be movable up and down with respect to the lower die, and
the flange presser is constituted by an outer circumferential edge of the heating plate.

3. The film application device according to claim 2, further comprising an upper presser and a lower presser configured to press the resin film from above and below, wherein
the pressing-down portion is located between the heating plate and the upper presser.

4. The film application device according to claim 3, further comprising an upper die provided so as to be movable up and down with respect to the lower die, the upper die being configured such that the heating plate and the upper presser are fixed to the upper die.

5. The film application device according to claim 2, wherein
the pressing-down portion is constituted by a blade portion, the blade portion being provided on the outer circumferential side of the heating plate so as to be movable up and down with respect to the heating plate, and
the blade portion is configured to cut the resin film.

6. The film application device according to claim 1, wherein
the first vacuum channel has the first end opening in the stepped surface, and
the outer edge portion is configured to cover the first end of the first vacuum channel in plan view.

7. The film application device according to claim 1, wherein
the lower die is formed with a second vacuum channel having a first end opening in the recessed portion,
the resin film is caused to come into close contact with the accommodation portion by drawing a gas located between the resin film and the accommodation portion through the second vacuum channel, and
the drawing through the first vacuum channel and the drawing through the second vacuum channel are performed simultaneously.

8. A film application method performed by the film application device according to any one of claims 1 to 7, the film application method comprising:
a step of pressing the flange by the flange presser and pressing down the resin film by the pressing-down portion; and
a step of drawing the gas in the sealed space through the first vacuum channel.
